# EUROPEAN PATENT APPLICATION

(11) **EP 4 678 284 A1**
(43) Date of publication of application: **14.01.2026**
(21) Application number: 25187059.8
(22) Date of filing: 02.07.2025
(51) Int. Cl.: B01J 23/42

(54) **PLATINUM PARTITIONING IN CATALYST ARTICLE FOR THREE-WAY CATALYSIS**

(30) Priority: 09.07.2024 US 202463668822 P
(71) Applicant: Johnson Matthey Public Limited Company, London EC2V 7AD (GB)
(72) Inventor: VLACHOU, Maria, Reading, RG4 9NH (GB); CORKUM, Marielle, Reading, RG4 9NH (GB); LU, Jing, Wayne, 19087 (US); BELL, Tamsin, Reading, RG4 9NH (GB); KOLPIN, Amy, Reading, RG4 9NH (GB)
(74) Representative: Boult Wade Tennant LLP

(57) **Abstract**

The present invention relates to a catalyst article for treating exhaust gas, the catalyst article comprising a substrate and at least a first catalytic region disposed on the substrate, wherein the first catalytic region comprises a ceria-zirconia support material and a non-ceria-zirconia support material; wherein from 0.1 to 3 wt.% Pt is supported on the ceria-zirconia support material, based on the total weight of the Pt supported on the ceria-zirconia support material and the ceria-zirconia support material; wherein less than 0.1 wt.% Pt is supported on the non-ceria-zirconia support material, based on the total weight of the Pt supported on the non-ceria-zirconia support material and the non-ceria-zirconia support material; and wherein the first catalytic region comprises from 0.1 to 50 g/ft³ Pt, based on the total volume of the substrate.

## Description

### FIELD OF THE INVENTION

The invention relates to a catalyst article, typically for three-way catalysis, a method of manufacturing the catalyst article, an emission treatment system and a method of treating exhaust gas. In particular, the invention relates to a catalyst article that comprises platinum (Pt) as a catalytically active metal.

### BACKGROUND OF THE INVENTION

A three-way catalyst (TWC) allows simultaneous conversions (~98%) of CO, HCs and NOₓ from gasoline engine exhaust to innocuous compounds at stoichiometric air-to-fuel ratio. Specifically, the oxidation of CO and HCs to CO₂ and steam (H₂O) is mainly catalyzed by Pd, while the reduction of NOₓ to N₂ is mainly catalyzed by Rh. Modern TWCs use supported precious group metal (PGM) catalysts (Pd, Rh, Pt, *etc.*) deposited on single, double or multilayer support, with the support material consists of metal oxides with high specific surface area, primarily stabilized gamma alumina and ceria-containing oxygen storage materials. The supported catalyst is washcoated on a ceramic monolithic substrate.

Conventional preparation of TWC washcoat slurry generally involves the use of a solution of an inorganic PGM precursor, e.g. nitrate, acetate, or chloride salt, to allow the PGM element to be deposited onto the metal oxide support *via* incipient wetness or wet impregnation. Promoter salts are also often added to the washcoat formulations for enhanced TWC performance. Once the monolithic substrate is washcoated with the as-prepared slurry, drying and calcination steps are followed to decompose the inorganic salts, to allow PGM and promoter elements to be fixed onto the support materials. It is known that the performance of supported metal catalysts depends on the structure and composition of the metal nanoparticles, and the nature of the support. Conventional TWCs prepared using the above method often provide only limited control over the structure of the catalytically active species (i.e. average PGM particle size and composition, location of the active components, and metal-support interactions). This is mainly due to metal migration and grain growth during high temperature calcination process.

With increasingly stringent environmental regulations, TWCs with higher emissions abatement efficiency are needed. On the other hand, with increasing PGM cost, there is an urgent need of reducing PGM loading without comprising TWC performance. In this regard there is a move to investigate Pt-based catalysts over Pd-based catalysts. A better control of the metal-support interaction is also essential in optimizing the TWC performance.

### SUMMARY OF THE INVENTION

One aspect of the present disclosure is directed to a catalyst article for treating exhaust gas, the catalyst article comprising a substrate and at least a first catalytic region disposed on the substrate, wherein the first catalytic region comprises a ceria-zirconia support material and a non-ceria-zirconia support material; wherein from 0.1 to 3 wt.% Pt is supported on the ceria-zirconia support material, based on the total weight of the Pt supported on the ceria-zirconia support material and the ceria-zirconia support material; wherein less than 0.1 wt.% Pt is supported on the non-ceria-zirconia support material, based on the total weight of the Pt supported on the non-ceria-zirconia support material and the non-ceria-zirconia support material; and wherein the first catalytic region comprises from 0.1 to 50 g/ft³ Pt, based on the total volume of the substrate.

Another aspect of the present disclosure is directed to a method of manufacturing the catalyst article of the above aspect, the method comprising: providing a ceria-zirconia support material having from 0.1 to 3 wt.% Pt supported thereon, based on the total weight of the Pt supported on the ceria-zirconia support material and the ceria-zirconia support material; providing a non-ceria-zirconia support material having less than 0.1 wt.% Pt supported thereon, based on the total weight of the Pt supported on the non-ceria-zirconia support material and the non-ceria-zirconia support material; preparing a washcoat slurry comprising the ceria-zirconia support material and the non-ceria-zirconia support material; and coating a substrate with the washcoat slurry to provide the catalyst article.

The invention also encompasses an emission treatment system comprising the catalyst article described herein and a method of treating an exhaust gas, the method comprising: providing the catalyst article described herein; and contacting the catalyst article with an exhaust gas.

### BRIEF DESCRIPTION OF THE DRAWINGS

**FIG. 1** shows a plot of NO conversion for Reference Catalyst 1 of the Examples compared to Catalyst 2 of the Examples.
**FIG. 2** shows a plot of CO conversion for Reference Catalyst 1 of the Examples compared to Catalyst 2 of the Examples.
**FIG. 3** shows a plot of total hydrocarbon (THC) conversion for Reference Catalyst 1 of the Examples compared to Catalyst 2 of the Examples.

### DETAILED DESCRIPTION OF THE INVENTION

The present invention seeks to tackle at least some of the problems associated with the prior art or at least to provide a commercially acceptable alternative solution thereto.

In a first aspect, the present invention provides a catalyst article for treating exhaust gas, the catalyst article comprising a substrate and at least a first catalytic region disposed on the substrate, wherein the first catalytic region comprises a ceria-zirconia support material and a non-ceria-zirconia support material;
wherein from 0.1 to 3 wt.% Pt is supported on the ceria-zirconia support material, based on the total weight of the Pt supported on the ceria-zirconia support material and the ceria-zirconia support material;
wherein less than 0.1 wt.% Pt is supported on the non-ceria-zirconia support material, based on the total weight of the Pt supported on the non-ceria-zirconia support material and the non-ceria-zirconia support material; and
wherein the first catalytic region comprises from 0.1 to 50 g/ft³ Pt, preferably from 0.1 to 20 g/ft³ Pt, based on the total volume of the substrate.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Typically, in catalyst articles comprising a catalytic region comprising two or more support materials, the catalytically active metal, such as a PGM, is supported on all available support materials. This is because typical methods of preparing the washcoats for such catalytic regions involve mixing all of the support materials for the catalytic region prior to supporting the catalytically active metal thereon by incipient wetness or wet impregnation, for example, or simply coating the washcoat mixture still comprising ions of the catalytically active metal on a substrate prior to calcining the washcoat and substrate. In this way the catalytically active metal is not selectively fixed onto any particular support material.

By contrast, in the present invention the inventors have controlled the washcoat preparation process such that the Pt is preferentially and selectively supported on the ceria-zirconia support material. Moreover, both the loading of the Pt on the ceria-zirconia support material and the total loading of the Pt in the first catalytic region is kept low.

Surprisingly, when used in an emission treatment system, the catalyst article of the present invention shows improved light-off performance for NOₓ, THC and CO conversion (i.e. improved TWC performance) relative to corresponding catalyst articles in which the support material on which the Pt is supported is not controlled, i.e. in which the Pt is supported evenly on any support material present in the relevant catalytic region. The effect of this Pt partitioning effect has not previously been recognised. As a result, the activity of the catalyst article may remain sufficient even when reducing the PGM content in the catalyst article, even for Pt.

Without wishing to be bound by theory, it is also thought that the preferential and selective fixing of the Pt onto the ceria-zirconia support material may improve the TWC catalytic activity of the catalyst article both by increasing the inherent resistance of the Pt to sintering and reducing deactivation due to CO poisoning.

The invention may therefore enable the total use of PGMs to be reduced, as well as using the lower-cost PGM Pt, over Pd, while maintaining suitable catalytic performance.

While the Pt is only substantially supported on the ceria-zirconia support material and not the non-ceria-zirconia support material, it is still necessary for the first catalytic region to comprise the non-ceria-zirconia support material. Without wishing to be bound by theory, it is thought that the presence of the non-ceria-zirconia support material may assist in achieving the desired packing density of the first catalytic region, while maintaining the low Pt loading. Moreover, the presence of the non-ceria-zirconia support material may improve the thermal stability of the first catalytic region of the catalyst article. Preferably, the non-ceria-zirconia support material comprises alumina, such as gamma alumina. The non-ceria-zirconia support material preferably consists of an alumina support material. The term "alumina support material" as used herein may encompass an alumina-based support material, for example encompassing pure alumina and doped alumina.

Without wishing to be bound by theory, it is thought that the fact that the interactions between the Pt and the ceria-zirconia support material are typically stronger than the interaction between the Pt and the non-ceria-zirconia support material, such as alumina, may contribute to the above-described effects. Gasoline emission catalysts must endure harsh aging and engine conditions with sustained high temperatures and rapid fluctuations between reductive and oxidative environments. These conditions promote the agglomeration of Pt atoms as nanoparticles, resulting in a decrease in metallic surface area and active sites of the catalytic Pt. Ceria surface facets may serve as trapping sites, creating a physical barrier to prevent Pt migration across the surface of the support. By contrast, non-ceria-zirconia support materials, such as alumina, do not typically exhibit such strong surface interactions with Pt, meaning that the Pt may more easily migrate across the surface of the non-ceria-zirconia support material and agglomerate during such harsh conditions.

The oxygen storage capability of the ceria-zirconia support material may additionally reduce CO poisoning of the catalyst. Pt strongly bonds to CO, blocking active sites, and resulting in the eventual deactivation of the catalyst. The ceria-zirconia support material provides readily available oxygen to promote the CO oxidation and desorption of CO₂. The ceria-zirconia support material therefore buffers the extreme lean-rich fluctuations by storing and releasing oxygen to mediate a stochiometric atmosphere.

The ceria-zirconia mixed oxide can have a weight ratio of zirconia to ceria at least 50:50; preferably, higher than 60:40; more preferably, higher than 75:25. Alternatively, the ceria-zirconia mixed oxide also can have a weight ratio of ceria to zirconia less than 50:50; preferably, less than 40:60; more preferably, less than 25:75.

Of course, the first catalytic region may comprise more than one ceria-zirconia support material and/or more than one non-ceria-zirconia support material, i.e. more than one species of ceria-zirconia support material and/or more than one species of non-ceria-zirconia support material. However, preferably, the first catalytic region, i.e. the support materials present in the first catalytic region, consists of the ceria-zirconia support material and the non-ceria-zirconia support material.

Preferably, from 0.1 to 2.5 wt.%, more preferably from 0.2 to 2 wt.%, even more preferably from 0.3 to 1.5 wt.%, still more preferably from 0.4 to 1.3 wt.%, still more preferably from 0.5 to 1.0 wt.%, still more preferably from 0.6 to 0.9 wt.%, still more preferably from 0.7 to 0.8 wt.% Pt is supported on the ceria-zirconia support material, based on the total weight of the Pt supported on the ceria-zirconia support material and the ceria-zirconia support material. Such a Pt loading may provide a good balance between reducing the use of PGMs and providing suitable catalytic performance.

It should be noted that in some embodiments, the Pt may not be supported on all of the particles of the ceria-zirconia support material that are present in the first catalytic region. For example, in some embodiments, the Pt may be supported on less than 90 wt.%, less than 80 wt.%, less than 70 wt.%, less than 60 wt.%, less than 50 wt.%, less than 40 wt.%, less than 30 wt.%, less than 20 wt.%, less than 10 wt.% of the particles of the ceria-zirconia support material that are present in the first catalytic region. However, preferably, the Pt is supported on substantially all (such as at least 99 wt.%) of the particles of the ceria-zirconia support material that are present in the first catalytic region.

Preferably, less than 0.01 wt.% Pt is supported on the non-ceria-zirconia support material, based on the total weight of the Pt supported on the non-ceria-zirconia support material and the non-ceria-zirconia support material. However, of course, it will be appreciated that during use of the catalyst article, particularly in harsh conditions, some Pt may migrate to the non-ceria-zirconia support material.

Preferably, the first catalytic region comprises from 0.1 to 19 g/ft³, more preferably from 1 to 18 g/ft³, even more preferably from 2 to 17 g/ft³, still more preferably from 3 to 16 g/ft³, still more preferably from 4 to 15 g/ft³, still more preferably from 5 to 14 g/ft³, still more preferably from 6 to 14 g/ft³, still more preferably from 7 to 13 g/ft³, still more preferably from 8 to 12 g/ft³ Pt, based on the total volume of the substrate.

Preferably, the first catalytic region comprises a promoter, preferably wherein the promoter comprises Ba and/or Mn. The promoter is preferably included to increase the oxygen storage capacity of the support material. As such, the promoter may facilitate CO oxidation.

Preferably, the first catalytic region further comprises Pd and/or Rh, preferably Pd. The Pd and/or Rh may be supported on the ceria-zirconia support material and/or the non-ceria-zirconia support material. In an alternative preferred embodiment, the first catalytic region comprises less than 0.1 wt.%, preferably less than 0.01 wt.% platinum group metals (PGMs) other than Pt, based on the total weight of the first catalytic region.

Preferably, the ceria-zirconia support material having the Pt supported thereon is substantially free (such as comprising less than 0.1 wt.%, preferably less than 0.01 wt.%) of other PGMs (i.e. non-Pt PGMs) supported thereon.

Preferably, the ceria-zirconia support material present in the first catalytic region consists essentially of, preferably consists of the ceria-zirconia support material supporting the Pt. However, of course, it will be appreciated that in practice it may be that small amounts of ceria-zirconia support material may not have any Pt supported thereon.

Preferably, less than 0.1 wt.%, more preferably less than 0.01 wt.% PGMs are supported on the non-ceria-zirconia support material, based on the total weight of the PGMs supported on the non-ceria-zirconia support material and the non-ceria-zirconia support material. Most preferably, the non-ceria-zirconia support material is substantially free (such as comprising less than 0.1 wt.%, preferably less than 0.01 wt.%) of PGMs supported thereon.

Preferably, the ceria-zirconia support material comprises a doped ceria-zirconia mixed oxide. The doped ceria-zirconia mixed oxide is preferably doped with an oxide of one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, preferably one or more of lanthanum, neodymium and yttrium. The dopant is preferably present in the doped ceria-zirconia mixed oxide in an amount of from 0.1 wt.% to 20 wt.%, preferably from 0.5 wt.% to 10 wt.%, based on the total weight of the doped ceria-zirconia mixed oxide.

Preferably, the first catalytic region comprises from 0.1 to 3 g/in³, more preferably from 0.2 to 2.5 g/in³, even more preferably from 0.3 to 2 g/in³, still more preferably from 0.4 to 1.5 g/in³, still more preferably from 0.5 to 1.0 g/in³, still more preferably from 0.6 to 0.9 g/in³ of the ceria-zirconia support material, based on the total volume of the substrate.

Preferably, the first catalytic region comprises from 0.1 to 3 g/in³, more preferably from 0.15 to 2.5 g/in³, even more preferably from 0.2 to 2 g/in³, still more preferably from 0.25 to 1.5 g/in³, still more preferably from 0.3 to 1.0 g/in³, still more preferably from 0.35 to 0.7 g/in³ of the non-ceria-zirconia support material, based on the total volume of the substrate.

Preferably, the first catalytic region further comprises a binder. Suitable binders are known to the skilled person. The binder preferably comprises a further alumina species, such as alumina or an alumina sol. Preferably, the first catalytic region comprises from 0.01 to 0.2 g/in³, more preferably from 0.02 to 1.7 g/in³, even more preferably from 0.03 to 1.5 g/in³, still more preferably from 0.04 to 1.3 g/in³, still more preferably from 0.05 to 1.2 g/in³, still more preferably from 0.06 to 1.0 g/in³ of the binder, based on the total volume of the substrate.

The catalyst article is preferably for three-way catalysis.

Preferably, the substrate comprises a wall flow filter substrate. In an alternative preferred embodiment, the substrate comprises a flow-through substrate. Preferably, the substrate comprises cordierite. However, the composition of the substrate is not particularly limited. The substrate may be a "blank", i.e. un-washcoated, substrate. Alternatively, the substrate may have one or washcoats already loaded thereon. In such a situation, the final catalyst article may comprise multiple layers of different washcoats.

Preferably, the ceria-zirconia support material particles have a D90 of from 0.1 to 25 µm, preferably from 0.5 to 15 µm. The term "D90" as used herein may encompass the value in the size distribution, up to and including which, 90% of the total volume of material in the sample is 'contained'. The D90 may be measured using any suitable technique, such as TEM.

Preferably, the non-ceria-zirconia support material particles have a D90 of from 0.1 to 25 µm, preferably from 0.5 to 15 µm. The term "D90" as used herein may encompass the value in the size distribution, up to and including which, 90% of the total volume of material in the sample is 'contained'. The D90 may be measured using any suitable technique, such as TEM.

The catalyst article preferably further comprises one or more further catalytic regions, such as second, third etc. catalytic regions. The one or more further catalytic regions may be different to the first catalytic region described herein and required by the invention. For example, the one or more further catalytic regions may be any suitable further catalytic region known to the skilled person. In particular, it is preferred that the one or more further catalytic regions comprise one or more catalytic regions for three-way catalysis. Preferably, one or more of the further catalytic regions comprise platinum, palladium and/or rhodium, preferably platinum and/or palladium. The platinum and/or palladium may be supported on a support material. Suitable support materials are known in the art.

In some preferred embodiments, the catalyst article comprises a substrate, the first catalytic region described herein and a second catalytic region. In other words, the catalyst article preferably further comprises a second catalytic region. The second catalytic region preferably has a different composition to that of the first catalytic region. Preferably, the second catalytic region comprises a PGM supported on a support material, and optionally one or more of a binder and a promoter. The PGM preferably comprises palladium and/or rhodium, preferably palladium. The support material preferably comprises alumina and/or a ceria zirconia mixed oxide. The binder preferably comprises alumina. The promoter preferably comprises barium and/or manganese.

The first catalytic region may be disposed on, preferably directly on, the second catalytic region. For example, the second catalytic region may be disposed directly on the substrate and the first catalytic region may be disposed directly on the second catalytic region. In these embodiments, the first and second catalytic regions are preferably washcoat layers, and the washcoat layers are each preferably applied over the entire length of the substrate. Alternatively, the first and second washcoat layers (corresponding to the first and second catalytic regions, respectively) may be coated over, for example, up to 80% of the substrate length from each end, respectively.

In an alternative embodiment, the catalyst article comprises a substrate, the first catalytic region described herein, a second catalytic region and a third catalytic region. In other words, the catalyst article may further comprise a second catalytic region and a third catalytic region. The second and third catalytic regions preferably have different compositions to that of the first catalytic region. Moreover, the second catalytic region preferably has a different composition to that of the third catalytic region.

The second catalytic region in this embodiment may be as described in the above embodiment. In this embodiment the first and third catalytic regions may be disposed on, preferably directly on, the second catalytic region in the form of zones. In particular, the second catalytic region is preferably disposed directly on the substrate, and the first and third catalytic regions are preferably each disposed directly on the second catalytic region. The second catalytic region is preferably disposed on the entire length of the substrate and the first and third catalytic regions are preferably disposed in the form of zones on the second catalytic region. In these embodiments, the first, second and third catalytic regions are preferably in the form of washcoat layers.

In these embodiments, the first catalytic region may be the rear zone, i.e. located at the intended outlet end of the catalyst article, and the third catalytic region may be the front zone, i.e. located at the intended inlet end of the catalyst article.

The third catalytic region may comprise rhodium supported on a support material. The support material is preferably alumina and/or a ceria-zirconia mixed oxide as described herein.

When the first and third catalytic regions are zoned, the two zones together are preferably applied over the entire length of the substrate, which is preferably the entire length of the second catalytic region.

Preferably, the first catalytic region is a single washcoat layer disposed on the substrate. The single washcoat layer may be coated along the entire length of the substrate, or over only a portion thereof. For example, preferably, the single washcoat layer is coated from one end (e.g. the inlet end or the outlet end in terms of the direction of intended use in an exhaust system) of the substrate, preferably coating less than 90%, less than 80%, less than 70%, less than 60%, less than 50%, less than 40%, less than 30%, less than 20%, or less than 10% of the length of the substrate. Preferably, the single washcoat layer is coated directly on the substrate. In an alternative preferred embodiment, there is one or more intervening washcoat layers located between the single washcoat layer of the invention and the substrate. The one or more intervening washcoat layers in this embodiment may be any suitable washcoat layer known to the skilled person. Preferably, the one or more intervening washcoat layers may be suitable for three-way catalysis. In other words, the catalyst article preferably further comprises one or more further washcoat layers.

In a further aspect, the present invention provides a method of manufacturing the catalyst article of the first aspect, the method comprising: providing a ceria-zirconia support material having from 0.1 to 3 wt.% Pt supported thereon, based on the total weight of the Pt supported on the ceria-zirconia support material and the ceria-zirconia support material; providing a non-ceria-zirconia support material having less than 0.1 wt.% Pt supported thereon, based on the total weight of the Pt supported on the non-ceria-zirconia support material and the non-ceria-zirconia support material; preparing a washcoat slurry comprising the ceria-zirconia support material and the non-ceria-zirconia support material; and coating a substrate with the washcoat slurry to provide the catalyst article.

Of course, the step of coating the substrate with the washcoat slurry may ensure that the first catalytic region comprises from 0.1 to 50 g/ft³ Pt.

The preferred embodiments and advantages of the first aspect apply equally this aspect. The order of method steps may enable the advantages described herein to be realised.

Preferably, providing a ceria-zirconia support material having from 0.1 to 3 wt.% Pt supported thereon, based on the total weight of the Pt supported on the ceria-zirconia support material and the ceria-zirconia support material, comprises: providing an aqueous suspension comprising Pt ions and the ceria-zirconia support material; and adjusting the pH of the suspension to cause Pt to be supported on the ceria-zirconia support material.

In other words, preferably, the Pt is supported on the ceria-zirconia support material by incipient wetness or wet impregnation.

Preferably, providing an aqueous suspension comprising Pt ions and the ceria-zirconia support material comprises combining water, a Pt salt (preferably a water-soluble Pt salt such as Pt nitrate, Pt acetate and/or Pt chloride) and the ceria-zirconia support material.

Adjusting the pH of the aqueous suspension preferably comprises contacting the aqueous suspension with a base, such as ammonium hydroxide. Adjusting the pH of the aqueous suspension preferably comprises adjusting the pH of the aqueous suspension to from 6 to 8, preferably from 6 to 7.

Preferably, preparing the washcoat slurry comprises: contacting the non-ceria zirconia support material and the ceria-zirconia support material having Pt supported thereon in an aqueous suspension to provide the washcoat slurry; and optionally subsequently mixing the washcoat slurry.

Preferably, the washcoat slurry further comprises a binder and preparing the washcoat slurry comprises contacting the binder, the non-ceria zirconia support material and the ceria-zirconia support material having Pt supported thereon in an aqueous suspension to provide the washcoat slurry; and optionally subsequently mixing the washcoat slurry.

Preferably, the washcoat slurry further comprises a promoter and preparing the washcoat slurry comprises contacting the promoter, the non-ceria zirconia support material and the ceria-zirconia support material having Pt supported thereon in an aqueous suspension to provide the washcoat slurry; and optionally subsequently mixing the washcoat slurry.

In other words, preparing the washcoat slurry preferably comprises contacting the non-ceria zirconia support material and the ceria-zirconia support material having Pt supported thereon, and optionally a binder and/or a promoter, in an aqueous suspension to provide the washcoat slurry; and optionally subsequently mixing the washcoat slurry.

Preferably, preparing the washcoat slurry further comprises contacting the washcoat slurry with (additional) water to adjust the solids content of the washcoat slurry; and optionally subsequently mixing the washcoat slurry. Preferably, the solids content of the washcoat slurry is adjusted to from 10 to 40 wt.%, more preferably to from 15 to 35 wt.%, even more preferably to from 20 to 30 wt.%. Such a solids content may facilitate easier application of the washcoat slurry onto/into the substrate.

Coating a substrate with the washcoat slurry may be carried out using techniques known in the art. Typically, the washcoat slurry may be poured into the inlet of the substrate using a specific moulding tool in a predetermined amount, thereby coating the washcoat slurry on the substrate. Alternatively, coating a substrate with the washcoat slurry may be carried out by immersing the substrate in the washcoat slurry. Subsequent vacuum and/or air knife and/or drying steps may be employed during the coating step. When the substrate is a filter block, the washcoat slurry may be coated on the filter walls, within the filter walls (if porous) or both.

Preferably, preparing the washcoat slurry further comprises contacting the washcoat slurry with a thickening agent. The washcoat slurry preferably comprises from 0.5 to 1.0 wt.% thickening agent, based on the total weight of water in the slurry.

Preferably, coating the substrate with the washcoat slurry to provide the catalyst article comprises calcining the substrate coated with the washcoat slurry. Calcining the substrate coated with the washcoat slurry preferably comprises heating the substrate coated with the washcoat slurry at a temperature of from 400 to 600°C for from 5 to 60 minutes, preferably in a static oven. The heating may be carried out in air or in an inert atmosphere, typically in air.

In some embodiments, the method further comprises providing one or more further washcoat slurries, and coating the substrate with the one or more further washcoat slurries to provide a catalyst article comprising the first catalytic region described herein, and one or more further catalytic regions, such as second, third etc. catalytic regions, as described herein.

In a further aspect, the present invention provides an emission treatment system comprising the catalyst article described herein. Preferably, the emission treatment system is for a gasoline engine. Preferably, the gasoline engine operates under stoichiometric conditions.

In a further aspect, the present invention provides a method of treating an exhaust gas, the method comprising: providing the catalyst article described herein; and contacting the catalyst article with an exhaust gas. Preferably, the exhaust gas is from a gasoline engine. Preferably, the gasoline engine operates under stoichiometric conditions.

### Definitions

The term "catalyst article" used herein may encompass an article in which a catalyst is supported thereon or therein. The article may take the form of, for example, a honeycomb monolith, or a filter, e.g. a wall flow filter or a flow-through filter.

The term "substrate" as used herein may encompass, for example, a ceramic or metallic honeycomb, or a filter block, *e.g.* a wall flow filter or flow-through filter. The substrate may comprise a ceramic monolithic substrate. The substrate may vary in its material composition, size and configuration, cell shape and density, and wall thickness. Suitable substrates are known in the art.

The term "catalytic region" as used herein may encompass an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

It is preferable that the "catalytic region" has a substantially uniform composition (i.e. there is no substantial difference in the composition of the washcoat when comparing one part of the region with another part of that region, on average). Substantially uniform composition in this context refers to a material (e.g., region) where the difference in composition when comparing one part of the region with another part of the region is 5% or less, usually 2.5% or less, and most commonly 1% or less.

The first catalytic region is disposed on the substrate. The term "disposed on" in the context of this aspect may encompass both having the catalytic region directly disposed on the substrate, i.e. with no intervening material, and/or indirectly disposed on the substrate, i.e. with intervening material. If the substrate is porous, then the term "disposed on" may also encompass having the catalytic region disposed therein, for example within the pores of the substrate, i.e. wherein the catalytic region is disposed thereon and/or therein.

The term "washcoat" as used herein is well-known in the field and refers to an adherent coating that is applied to a substrate usually during the production of a catalyst. Preferably, the first catalytic region is a washcoat layer.

The term "support material", in general, as used herein may encompass any known support material that may be used to support PGMs in the field of the present invention, typically in powder form.

The relative terms "first", "second", etc. as used herein are simply labels used in order to distinguish the layers and are not intended to indicate the relative arrangement of the catalytic regions, unless stated otherwise.

The term "ceria-zirconia" as used herein may encompass a ceria-zirconia mixed oxide, i.e. a ceria-zirconia-based mixed oxide. As described herein, the ceria-zirconia mixed oxide may comprise additional dopants, but the ceria-zirconia mixed oxide may also consist of ceria and zirconia.

The term "non-ceria-zirconia support material" as used herein may encompass a support material as defined herein, which is not a ceria-zirconia as defined herein.

The term "supported on" in the context of "Pt is supported on the ceria-zirconia support material" as used herein may encompass that the Pt, typically in the form of nanoparticles, is directly in contact, and physically and/or chemically bound to the surface of the support material. The term "surface of the support material" may encompass the surface of the pores within a porous support material, for example.

The term "zone" as used herein refers to a region having a length that is less than the total length of the substrate, such as ≤ 75 % of the total length of the substrate. A "zone" typically has a length (*i.e.* a substantially uniform length) of at least 5% (*e.g.* ≥ 5 %) of the total length of the substrate.

The total length of a substrate is the distance between its inlet end and its outlet end (*e.g.* the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:
(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:
(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The invention will now be described in relation to the following non-limiting examples.

### Example 1 - preparation of catalyst articles

Two washcoated catalyst articles with Pt supported on ceria-zirconia mixed oxide were prepared and aged under rich prolonged redox conditions. The catalyst articles were prepared as follows.

### Reference Catalyst 1:

1. An aqueous slurry of Pt nitrate was prepared (target Pt loading 10 g/ft³).
2. Milled gamma alumina support was added to the slurry (target gamma alumina loading 0.5 g/in³), and the slurry was mixed for 1 hour.
3. A ceria-zirconia support material was added to the slurry (target ceria-zirconia support material loading 0.8 g/in³), and the slurry was mixed for 30 minutes.
4. A binder material and a thickening agent were added to the slurry and the slurry was mixed overnight.
5. A cordierite substate was coated with a 1.2 inch single dose washcoat from the inlet end under vacuum pull, dry with air cure.
6. The coated brick was then fired at 500 °C for 30 min in a static oven.

### Catalyst 2:

1. An aqueous slurry of Pt nitrate was prepared (target Pt loading 10 g/ft³).
2. A ceria-zirconia support material was added to the slurry (target ceria-zirconia support material loading 0.8 g/in³).
3. The pH of the slurry was adjusted to a target pH of from 6-7 using an ammonium hydroxide solution, and the slurry was mixed for 1 hour.
4. Milled gamma alumina support was added to the slurry (target gamma alumina loading 0.5 g/in³), and the slurry was mixed for 1 hour.
5. A binder material and a thickening agent were added to the slurry and the slurry was mixed overnight.
6. A cordierite substate was coated with a 1.2 inch single dose washcoat from the inlet end under vacuum pull, dry with air cure.
7. The coated brick was then fired at 500 °C for 30 min in a static oven.

Compared to Reference Catalyst 1, Catalyst 2 therefore has the Pt selectively fixed to the ceria-zirconia support material.

### Example 2 - testing results

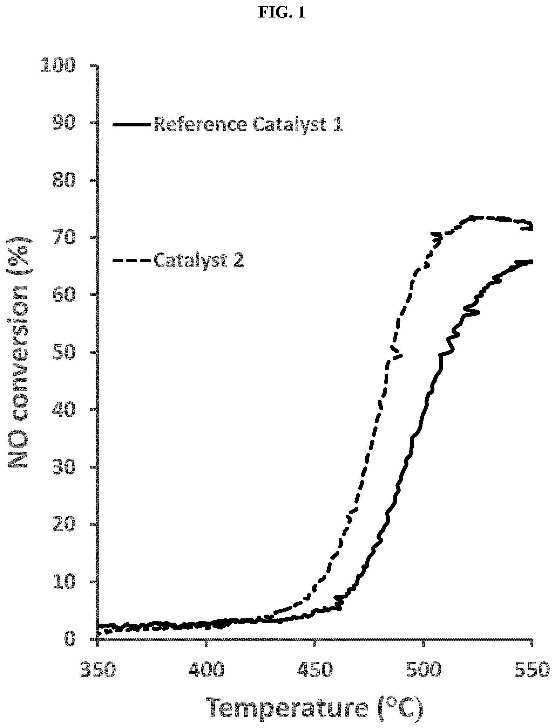

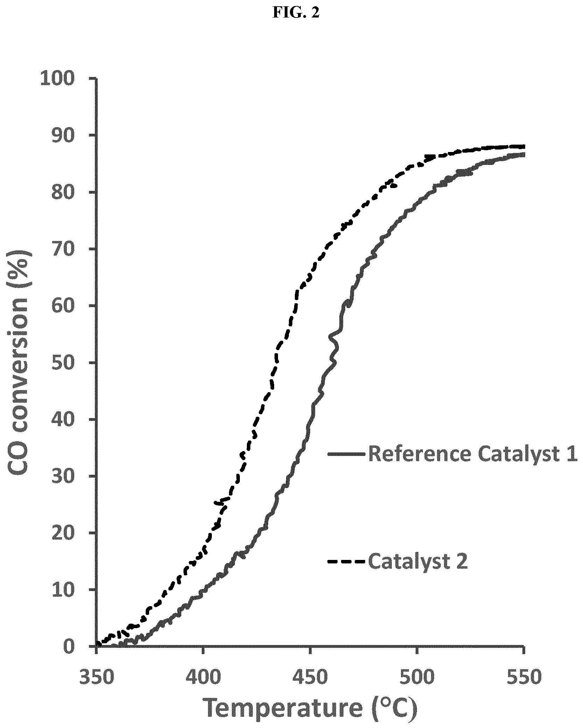

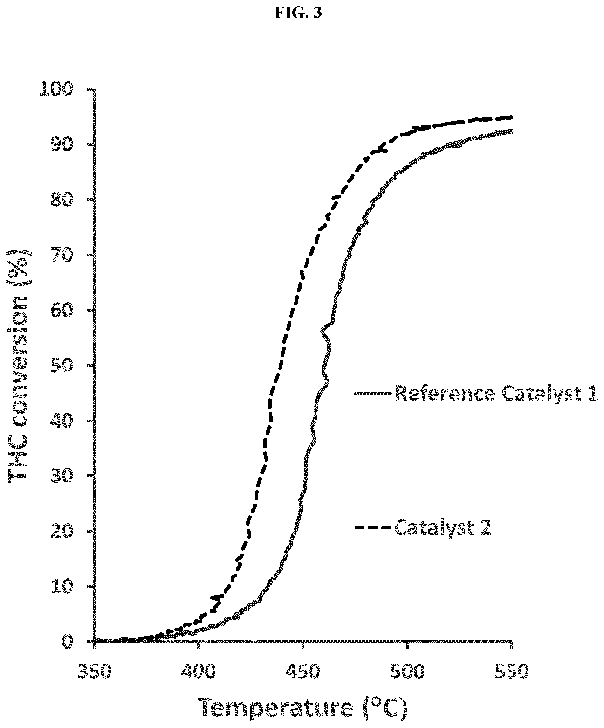

The catalyst articles were compared for perturbated light-off performance under simulated gasoline exhaust conditions; with the results shown in **Figs. 1-3** for NO, CO and THC conversions, respectively, under rich prolonged redox aging. The reaction conditions were, with rich pre-treatment, 150-700 °C, *λ*=0.96~1.04, gas hourly space velocity = 200,000 hr⁻¹.

The reference Pt TWC catalyst was compared to the catalyst prepared by selectively fixing Pt to the ceria-zirconia support material.

As can be seen in **Figs. 1-3** The light-off performance of the catalyst improved upon fixing the Pt on the ceria-zirconia support material with both the T50 temperature and the maximum conversions of NO, CO, and THC at 550°C. The maximum T50 reductions for NO, CO, and THC for Catalyst 2 compared to Reference Catalyst 1 were approximately 24°C, 26°C, and 22 °C respectively. The maximum NOₓ conversion also increased from 66% to 74% for Catalyst 2.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

1. A catalyst article for treating exhaust gas, the catalyst article comprising a substrate and at least a first catalytic region disposed on the substrate, wherein the first catalytic region comprises a ceria-zirconia support material and a non-ceria-zirconia support material;
wherein from 0.1 to 3 wt.% Pt is supported on the ceria-zirconia support material, based on the total weight of the Pt supported on the ceria-zirconia support material and the ceria-zirconia support material;
wherein less than 0.1 wt.% Pt is supported on the non-ceria-zirconia support material, based on the total weight of the Pt supported on the non-ceria-zirconia support material and the non-ceria-zirconia support material; and
wherein the first catalytic region comprises from 0.1 to 50 g/ft³ Pt, based on the total volume of the substrate.

2. The catalyst article of claim 1, wherein the first catalytic region comprises from 0.1 to 20 g/ft³ Pt, based on the total volume of the substrate.

3. The catalyst article of claim 1 or claim 2, wherein the non-ceria-zirconia support material comprises alumina.

4. The catalyst article of any preceding claim, wherein from 0.1 to 2.5 wt.%, preferably from 0.2 to 2 wt.%, more preferably from 0.3 to 1.5 wt.% Pt is supported on the ceria-zirconia support material, based on the total weight of the Pt supported on the ceria-zirconia support material and the ceria-zirconia support material.

5. The catalyst article of any preceding claim, wherein less than 0.01 wt.% Pt is supported on the non-ceria-zirconia support material, based on the total weight of the Pt supported on the non-ceria-zirconia support material and the non-ceria-zirconia support material.

6. The catalyst article of any preceding claim, wherein the first catalytic region comprises a promoter, preferably wherein the promoter comprises Mn.

7. The catalyst article of any preceding claim, wherein the first catalytic region further comprises Pd and/or Rh, preferably Pd.

8. The catalyst article of any preceding claim, wherein the ceria-zirconia support material comprises a doped ceria-zirconia mixed oxide.

9. The catalyst article of any preceding claim, wherein the first catalytic region comprises from 0.1 to 3 g/in³ of the ceria-zirconia support material, and/or from 0.1 to 3 g/in³ of the non-ceria-zirconia support material, based on the total volume of the substrate.

10. The catalyst article of any preceding claim for three-way catalysis.

11. A method of manufacturing the catalyst article of any preceding claim, the method comprising:
providing a ceria-zirconia support material having from 0.1 to 3 wt.% Pt supported thereon, based on the total weight of the Pt supported on the ceria-zirconia support material and the ceria-zirconia support material;
providing a non-ceria-zirconia support material having less than 0.1 wt.% Pt supported thereon, based on the total weight of the Pt supported on the non-ceria-zirconia support material and the non-ceria-zirconia support material;
preparing a washcoat slurry comprising the ceria-zirconia support material and the non-ceria-zirconia support material; and
coating a substrate with the washcoat slurry to provide the catalyst article.

12. The method of claim 11, wherein providing a ceria-zirconia support material having from 0.1 to 3 wt.% Pt supported thereon, based on the total weight of the Pt supported on the ceria-zirconia support material and the ceria-zirconia support material, comprises:
providing an aqueous suspension comprising Pt ions and the ceria-zirconia support material; and
adjusting the pH of the suspension to cause Pt to be supported on the ceria-zirconia support material.

13. The method of claim 11 or claim 12, wherein preparing the washcoat slurry comprises:
contacting the non-ceria zirconia support material and the ceria-zirconia support material having Pt supported thereon in an aqueous suspension to provide the washcoat slurry; and optionally
subsequently mixing the washcoat slurry.

14. An emission treatment system comprising the catalyst article of any of claims 1 to 10.

15. A method of treating an exhaust gas, the method comprising:
providing the catalyst article of any of claims 1 to 10; and
contacting the catalyst article with an exhaust gas.
